Europäisches Patentamt

European Patent Office

Office européen des brevets

(11) Publication number: **0 174 468**
**B1**

# EUROPEAN PATENT SPECIFICATION

(45) Date of publication of patent specification: **11.01.89**

(51) Int. Cl.⁴: **F 16 C 7/00, B 29 B 15/10**

(21) Application number: **85108875.7**

(22) Date of filing: **16.07.85**

(54) Tie-bar with internal lubrication.

(30) Priority: **29.08.84 US 645210**

(43) Date of publication of application:
**19.03.86 Bulletin 86/12**

(45) Publication of the grant of the patent:
**11.01.89 Bulletin 89/02**

(84) Designated Contracting States:
**DE FR GB IT**

(56) References cited:
**FR-A-2 072 227**
**FR-E- 90 913**
**US-A-3 434 899**
**US-A-3 460 628**

**CHEMICAL ABSTRACTS, vol. 93, no. 22, 1st December 1980, page 56, no. 205779c, Columbus, Ohio, US; & JP - A - 80 19 944 (TEIJIN CHEMICALS, LTD. / TOYO TANSO KOGYO LTD.) 29-05-1980**

(73) Proprietor: **ALLIED-SIGNAL INC.**
**Columbia Road and Park Avenue P.O. Box 2245R Morristown New Jersey 07960 (US)**

(72) Inventor: **Ditlinger, Richard J. Allied Corporation**
**Law Department(Patent) 401 Bendix Drive P.O. Box 4001 South Bend Indiana 46634 (US)**

(74) Representative: **Brock, Peter William ALLIED-SIGNAL INC. Law Department 48 Leicester Square London WC2H 7LW (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a tie-bar with internal lubrication between individual wire strands of the assembly whereby the wire strands are free to move relative to one another as a result of axial and torsional forces exerted thereon.

It has been the practice to make structures subjected to high tensile and torsional loading, for example the connecting members or tie-bars between helicopter rotor blades and the driving rotor, from a pair of metal bushings connected together by endless strands of parallel wires secured together by an adhesive resin such as urethane, with the resin disposed between each of the wires. Such urethane impregnated tie-bar assemblies are illustrated in US—A—3434899 and -3460628. Optionally, as shown in FR—E—90913, molybdenum disulfide can be incorporated in the elastomer to prevent chafing and fretting corrosion between the wires.

Urethane impregnated tie-bar assemblies present a number of problems in their manufacture and use. The tie-bar is wet wrapped during the assembly process and the urethane material comprises a carcinogenic material which requires that workers wear protective clothing in an enclosed area because of the inherent dangers. During the wrapping procedure, the urethane material can set up in approximately fifteen minutes, such that the assembly process must be continuous and additional new amounts of urethane added when the urethane in the applicator reservoir sets up and becomes too firm for further effective wrapping. This problem relates generally to the pot life of the urethane material during the wrapping procedure. The urethanes utilized comprise the castable type which is placed within a form and assumes the cast form of the material, and which results in a costly assembly operation. During use, the urethane matrix separating the wires prevents galling or rubbing abrasion between the wires as a result of shear deflections between the wires during operational twist cycles of the associated rotor blades. However, the continuous axial and torsional forces exerted upon the tie-bar during the operational twist cycles eventually deteriorate the urethane material of the matrix such that galling between the wires may occur, and eventual delamination occurs. This has deleterious effects upon the operational wear life of the tie-bar. During assembly, the portions of the urethane coated wire strands which are wrapped about the bushings occupy a smaller volume than do the portions of the wires disposed between the bushings. This is because the wires are wrapped tightly about the bushings such that there is a radially inward force exerted by the wires against the bushings to compress the laminations of wires and minimize the amount of urethane contained between the wires. In the areas between the bushings, i.e., the parallel side portions of the laminations of wires, there is no radially inward force other than the parallel wires disposed adjacent one another and thus the urethane matrix causes an increase in thickness of the wire form cross-section in the region between the bushings and results in an increase in the envelope of the tie-bar. Prior tie-bars have a solid body of urethane disposed between the parallel side portions of the laminations, but this body of urethane contributes no useful function because the tie-bars use the urethane impregnated matrix to maintain tension effected by the wrapping procedure. Indeed, as disclosed in FR—E—90913, this solid body can be removed, except from near the bushings, in order to reduce weight.

Because of the above problems inherent with castable urethane impregnated tie-bar assemblies, it is desirable to provide a tension-torsion tie-bar assembly which may be assembled in the initial wrapping procedure without the use of any carcinogenic material. A tension-torsion tie-bar produced by a dry wrap process should provide a plurality of superimposed bands of wires which will permit free movement of the wires relative to one another, without galling or abrasion between the wires during the operational twist cycles of the flexing structures attached to the tie-bar. It is desired that the wires provide for the free movement of each other relative to one another whereby uneven force stresses exerted at the bushings are dissipated to the areas of the wires in the region between the bushings.

This invention provides a tension-torsion tie-bar comprising a pair of bushings having spaced radially extending flanges, means for connecting each of said bushings respectively to structures exerting stress on the longitudinal axis of the tie-bar, a plurality of superimposed bands including individual wires disposed in adjacent, parallel arrangement, said wires being wrapped continuously around said bushings to form a solid link having semi-circular ends joined by oppositely disposed, spaced-apart side portions of said superimposed bands, and a cured adhesive composition disposed between said spaced-apart side portions and encapsulating said side portions.

According to this invention, individual wires are not separated and not bonded by said adhesive composition each of said wires has a solid film lubricant thereon so that said wires may move relative to one another; and said adhesive composition is disposed between said side portions thereby forming means for maintaining the bushings in spaced apart relationship.

The invention also provides a method for making a tie-bar as defined above, comprising the steps of:

drawing wires from uniformly rotating spools, said wires having a coating of solid film lubricant thereon, or being coated with said lubricant after drawing from said spools;

drawing said wires through a die to arrange each of said wires parallel to each other in a band formation;

attaching an end of the band formation to one of two spaced-apart flanged bushings in a rotating fixture;

rotating said fixture to wrap the band formations about each of the bushings between the flanges thereof;

cutting the band formation of wires when a sufficient number of layers thereof have been wrapped about said bushings to form a lamination of band formations;

securing the loose end of said band formation of wires; and

encapsulating the lamination of band formations by application of an adhesive material thereabout, and curing to polymerize the material.

The invention is described in detail with reference to the drawings which illustrate:

Figure 1 is an isometric view of the tension-torsion tie-bar assembly of the present invention;

Figure 2 is the cross sectional view taken along view line 2—2 of Figure 1;

Figure 3 is a cross sectional view taken along view line 3—3 of Figure 1; and

Figure 4 illustrates the performance that results for a prior tie-bar and tie-bars made in accordance with the present invention.

The present invention comprises a tension-torsion tie-bar that may be utilized as a connecting member between a helicopter rotor blade and the driving rotor, such as illustrated in US—A—3434899 and —3460628. The urethane impregnated tie-bar assemblies provide an undesirable shear bond effect because the urethane is disposed between each of the wires so that a urethane matrix encompasses the superimposed bands of wires. During the twist operational cycles, forces cause the wires to move relative to one another and this is resisted by the urethane material disposed between the individual wires. As a result, this produces the undesirable shear bond effect which resists the movement of the wires relative to one another. In the areas where the wires are wrapped around the bushings, the wires at different radii are strained differently and because the urethane material secures the wires together, the urethane matrix does not permit dissipation of forces to the two side portions of the wires disposed in the region between the bushings. The urethane material of the prior art structures is necessary in order to keep the bushings in their spaced-apart relationship and maintain the compressive force exerted by the wrapped wires against the bushings. While the urethane material initially maintains the compressive tension exerted by the wire laminations between the bushings, the shear bonds eventually weaken which leads to eventual deterioration of the tie-bar assembly.

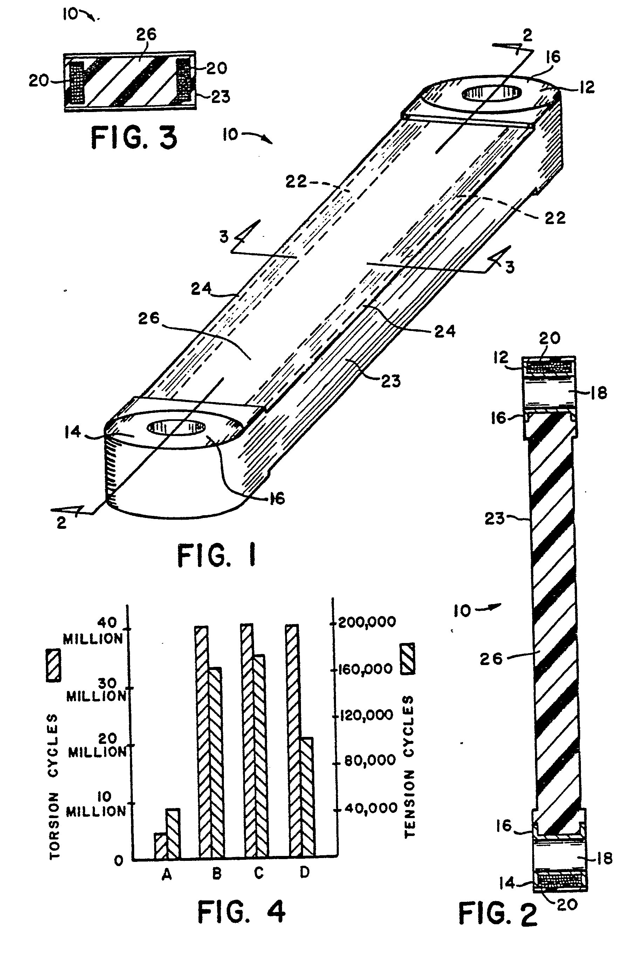

The present invention comprises a tension-torsion tie-bar assembly designated generally by reference numeral 10 in Figures 1—3. The tie-bar assembly 10 comprises a pair of bushings 12 and 14 disposed in a spaced-apart relationship in the assembly. Each bushing 12, 14 includes end flanges 16 extending radially outwardly from cylindrical portions which include through openings 18 therein. The bushings 12, 14 are disposed in a fixture similar to the fixture illustrated and explained in US—A—3,434,899, incorporated by reference herein. However, the assembly procedure for the tie-bar of the present invention is significantly different and provides for certain major advantages and reduction in costs, as will be explained hereinafter. Referring to Figures 2 and 3, a plurality of filaments 20 comprising dry film lubricant coated wires are wrapped continuously in an endless connection disposed about the bushings 12 and 14. The wires are coated with a dry film lubricant such as graphite, molybdenum disulfide, or any equivalent lubricant which may be coated onto the wires prior to the assembly procedure for the tension-torsion tie-bar. Alternatively, the dry film lubricant may be coated on the wires during the assembly procedure. The wires 20 are fed into and through a wrapping machine or apparatus as previously disclosed in the cited patents, but with a major difference comprising that the wires are dry wrapped about the bushings 12 and 14. In other words, resin material such as the previously used carcinogenic urethanes are not utilized in the wrapping process. The bands of wires disposed in parallel relationship are wrapped continuously about the bushings which are maintained within a fixture attached to the wrapping apparatus. When the wrapping of the bands of parallel wires 20 has been completed, there is produced a plurality of superimposed bands 22 of wires, with the cut ends of the wires attached to either the subassembly or the fixture holding the subassembly. This subassembly comprising the bushings with the superimposed bands 22 wrapped thereabout which provide side portions 24, may be used at that time in an encapsulation procedure or may be stored for an indefinate period of time and used in the encapsulation procedure at a later time.

The encapsulation procedure is effected in essentially the same manner as described in US—A—3434899 and US—A—3460628. A resin material 23 such as a reaction injected molded elastomeric urethane is injected within the fixture device and about the superimposed bands to provide a smooth outer contour which affords protection in handling the coupling, and providing a solid body 26 of resin material between spaced-apart side portions 24. Alternatively, the material 23 may be an elastomeric thermoplastic or thermosetting urethane. The resin coated tie-bar assembly is then subjected to a cure process so that the resin material is completely polymerized. The product comprises the tie-bar assembly 10 which appears as a smooth surfaced, solid body comprising spaced-apart bushings 12 and 14, spaced-apart side portions 24 each encapsulating the superimposed bands 22 therein, and the solid body of resin material 26 disposed between the side portions.

The tie-bar assembly of the present invention presents substantial advantages in assembly procedures and manufacturing costs, and provides a superior product as compared to prior urethane inpregnated tie-bar assemblies. Because the tie-bar assembly 10 is wrapped dry, there is no messy debris to clean up after the wrapping assembly, and more importantly, there is no carcinogenic material involved whereby protective clothing and a specially restricted wrapping area are not necessary for the wrapping procedure. The wrapping procedure may proceed at a more scheduled pace, with less criticality as to the time period of the wrapping procedure, because the dry film coated wire strands are dry wrapped and thus matrix pot life is not a factor in the wrapping procedure. The encapsulation procedure can be performed at any time after the wrapping procedure, there being no need to accomplish this immediately thereafter because, again, matrix pot life is not involved. A wider choice of materials may be utilized for the encapsulating procedure. In the prior constructions, the encapsulation generally required that the same type of resin as the matrix material be used. The prior resins usually fell in the category of the castable type rather than the easier to process and less expensive reaction injection molded urethanes. The reaction injected molded urethanes are not only cheaper, but also are noncarcinogenic.

The tie-bar assembly of the present invention provides a product that is superior to prior urethane impregnated tie-bar assemblies. Because the individual wires are not separated and bonded by a urethane matrix, the wires are free to move relative to one another in order to more efficiently dissipate the uneven stresses and forces exerted on the wires in the vicinity of the bushings which provide for attachment of the tie-bar assembly to the stress flexing structures. The dry film lubricant comprising graphite, molybdenum disulfide, or any other suitable dry powder or material applied to the wire prior to assembly, separates the wires and lubricates the interfaces so that stress concentrations are not built up in the areas adjacent the bushings. When axial and torsional forces are exerted on the bushings, the laminations of wire strands at the bushings receive these forces and evenly dissipate the stresses to the regions of the wires disposed between the bushings. It should be clearly understood that the low modulus material or noncarcinogenic urethane material used in the encapsulation process and providing solid body 26 between spaced-apart side portions 24, keeps the bushings in their spaced-apart relationship and maintains the compressive tension exerted by the wire strand laminations tightly wrapped around the bushings. Thus, central body portion 26 maintains bushings 12, 14 in their spaced-apart relationship and maintains the superimposed bands in parallel relationship without penetrating between the bands to form the urethane matrix provided in prior art assemblies. Because the urethane material does not penetrate into the parallel strands of superimposed bands, the bands are free to move relative to one another during operational twisting cycles. Additionally, the elimination of the urethane matrix enables the cross section of superimposed bands at the regions between the bushings to be substantially identical to the cross section of the same bands in the areas at the bushings. Thus, there is no variation in the thickness of the cross sections which would increase the tie-bar envelope, and which occurred in the prior constructions because of the urethane matrix.

The precoated, dry film lubricated wires are free to move and the lubricant prevents galling or rubbing abrasion between the wires. Because of the higher compressive strength of the dry film lubricant, the lubricant will be more effective in preventing galling than did the urethane impregnated structures. Urethane has a compressive strength of approximately five Hectobars, while the dry film lubricant has a compressive strength of approximately three hundred forty-five Hectobars. The tension-torsion tie-bar of the present invention can withstand higher loads and is more durable than the urethane impregnated tie-bar constructions. Because the present invention does not require a urethane matrix between the wires, there are no undesirable shear bonds provided and thus the tie-bars do not become limp and delaminated after limited usage because of the deterioration of the shear bonds. Also eliminated is the requirement that some urethane impregnated tie-bar constructions had to incorporate a nylon corset as a redundant feature to mitigate the effects of delamination which occurred after the shear bonds eventually deteriorated.

The solid film lubricant used in the present invention will allow unhampered shear deflections between the wires. This was not true of the prior urethane impregnated tie-bar constructions which tended to bond the wires together and restrict movement of the wires relative to one another and thereby caused stress concentration. It has been found that the complex strain patterns in tie-bars requires that the wires be able to shift freely relative to each other in order to avoid stress concentrations. This is effectively accomplished by the tie-bar construction of the present invention. Tie-bars assembled in accordance with the present invention have demonstrated a strong fatigue performance that was superior to that exhibited by the prior urethane impregnated tie-bar constructions. The tie-bars maintained their shape and torsional stiffness throughout testing and provided superior results. A performance comparison is shown in Figure 4. Figure 4 illustrates a performance test comparison between a wet-wrapped urethane impregnated tie-bar (A) and three tie-bars with internal lubrication (B, C, and D) and made in accordance with the present invention. Each tie-bar A—D was subjected to torsion (twisting) and tension (stretching). Figure 4 illustrates the superiority of tie-bars having internal lubrication.

**Claims**

1. A tension-torsion tie-bar (10) comprising a pair of bushings (12, 14) having spaced radially extending flanges (16), means (18) for connecting each of said bushings (12, 14) respectively to structures exerting stress on the longitudinal axis of the tie-bar (10), a plurality of superimposed bands (22) including individual wires (20) disposed in adjacent, parallel arrangement, said wires (20) being wrapped continuously around said bushings (12, 14) to form a solid link having semi-circular ends joined by oppositely disposed, spaced-apart side portions (24) of said superimposed bands (22), and a cured adhesive composition (23) disposed between said spaced-apart side portions (24) and encapsulating said side portions, characterized in that individual wires (20) are not separated and not bonded by said adhesive composition (23), each of said wires (20) has a solid film lubricant thereon so that said wires may move relative to one another; and said adhesive composition (23) is disposed between said side portions (24) thereby forming means (26) for maintaining the bushings (12, 14) in spaced apart relationship.

2. The tie-bar (10) in accordance with claim 1, characterized in that said solid film lubricant comprises graphite or molybdenum disulfide.

3. The tie-bar (10) in accordance with claim 1, characterized in that the connecting means (18) comprises a through opening (18) in each of said bushings (12, 14).

4. The tie-bar (10) in accordance with claim 1, characterized in that said wires (20) are free to move relative to one another while substantially preventing abrasion by engagement therebetween.

5. The tie-bar (10) in accordance with claim 1, wherein said adhesive composition is a reaction injected molded elastomeric urethane, or an elastomeric thermoplastic or thermosetting urethane.

6. A method for making a tie-bar (10) as defined in claim 1 comprising the steps of:

drawing wires (20) from uniformly rotating spools, said wires having a coating of solid film lubricant thereon, or being coated with said lubricant after drawing from said spools;

drawing said wires (20) through a die to arrange each of said wires (20) parallel to each other in a band formation;

attaching an end of the band formation (22) to one of two spaced-apart flanged bushings (12, 14) in a rotating fixture;

rotating said fixture to wrap the band formations (22) about each of the bushings (12, 14) between the flanges thereof;

cutting the band formation of wires (20) when a sufficient number of layers thereof have been wrapped about said bushings (12, 14) to form a lamination of band formations;

securing the loose end of said band formation (22) of wires; and

encapsulating the lamination of band formations (22) by application of an adhesive material (23) thereabout, and curing to polymerize the material.

7. The method in accordance with claim 6, characterized in that the solid film lubricant is graphite or molybdenum disulfide.

8. The method in accordance with claim 6, characterized in that the adhesive material (23) comprises a low modulus urethane.

9. The method in accordance with claim 6, characterized in that said adhesive material (23) is a reaction injected molded elastomeric urethane, or an elastomeric thermoplastic or thermosetting urethane.

**Patentansprüche**

1. Zug- und Torsionskupplungsstange (10), bestehend aus zwei Buchsen (12, 14), die beabstandete, radial verlaufende Flansche (16), eine Einrichtung (18) zur Verbindung jeder Buchse (12, 14) mit eine Belastung auf die Längsachse der Kupplungsstange (10) ausübenden Einrichtungen, mehrere übereinander liegende Bänder (22), die einzelne, in benachbarter, paralleler Anordnung angeordnete Drähte (20) umfaßt, die kontinuierlich um die Buchsen (12, 14) gewickelt sind, um eine massive Verbindung zu bilden, die halbkreisförmige Enden hat, die durch gegenüberliegend angeordnete, beabstandete Seitenteile (24) der übereinanderliegenden Bänder (22) gebildet sind, und eine gehärtete Klebstoffsubstanz (23) aufweist, die zwischen den beabstandeten Seitenteilen (24) angeordnet ist und die Seitenteile einkapselt, dadurch gekennzeichnet, daß die einzelnen Drähte (20) durch die Klebstoffsubstanz (23) nicht voneinander getrennt und nicht verbunden sind, daß jeder der Drähte (20) mit einem Feststofffilmschmiermittel versehen ist, so daß sich die Drähte relativ zueinander bewegen können, und daß die Klebstoffsubstanz (23) zwischen den Seitenteilen (24) angeordnet ist, so daß sie eine Einrichtung (26) bildet, um die Buchsen (12, 14) beabstandet zu halten.

2. Kupplungsstange (10) nach Anspruch 1, dadurch gekennzeichnet, daß das Feststofffilmschmiermittel Graphit oder Molybdändisulfid aufweist.

3. Kupplungsstange (10) nach Anspruch 1, dadurch gekennzeichnet, daß die Verbindungseinrichtung (18) eine Durchgangsöffnung (18) in jeder der Buchsen (12, 14) aufweist.

4. Kupplungsstange (10) nach Anspruch 1, dadurch gekennzeichnet, daß sich die Drähte (20) relativ zueinander frei bewegen können, so daß eine Abnutzung durch gegenseitige Berührung im wesentlichen verhindert wird.

5. Kupplungsstange nach Anspruch 1, dadurch gekennzeichnet, daß die Klebstoffsubstanz reaktions-spritzgegossenes elastomeres Urethan, ein elastomerer Thermoplast oder wärmehärtendes Urethan ist.

6. Verfahren zur Herstellung einer Kupplungsstange (10) nach Anspruch 1, das die folgenden Schritte umfaßt:

Drähte (20) werden von sich gleichförmig drehenden Spulen gezogen, wobei die Drähte mit einer Schicht eines Feststofffilmschmiermittel versehen sind oder nach dem Abziehen von den Spulen mit diesem Schmiermittel beschichtet werden,

die Drähte (20) werden durch eine Form gezogen, um jeden der Drähte (20) in einer Bandformation parallel zueinander anzuordnet,

eine Ende der Bandformation (22) wird mit einer von zwei beabstandeten, mit Flanschen versehenen Buchsen (12, 14) in einer Drehhalterung befestigt,

die Halterung wird gedreht, um die Bandformationen (22) um jede der Buchsen (12, 14) zwischen deren Flanschen zu wickeln,

die Bandformation aus den Drähten (20) wird geschnitten, wenn eine ausreichende Anzahl von Schichten um die Buchsen (12, 14) gewickelt worden ist, um ein Laminat aus Bandformation zu bilden,

das lose Ende der Bandformation (22) aus den Drähten wird befestigt, und

das Laminat aus den Bandformationen (22) wird durch Umgeben mit Klebstoffmaterial (23) eingekapselt, und es wird ein Härtevorgang durchgeführt, um das Material zu polymerisieren.

7. Verfahren nach Anspruch 6, dadurch gekennzeichnet, daß das Feststofffilmschmiermittel Graphit oder Molybdändisulfid ist.

8. Verfahren nach Anspruch 6, dadurch gekennzeichnet, daß die Klebstoffsubstanz (23) ein Urethan mit niedrigem Modul aufweist.

9. Verfahren nach Anspruch 6, dadurch gekennzeichnet, daß die Klebstoffsubstanz (23) reaktions-spritzgegossenes elastomeres Urethan, ein elastomerer Thermoplast oder wärmehärtendes Urethan ist.

**Revendications**

1. Biellette de tension-torsion (10) comprenant une paire de coussinets (12, 14) ayant des flasques espacés, s'étendant radialement (16), un moyen (18) pour connecter chacun des coussinets (12, 14) respectivement à des structures exerçant des efforts sur l'axe longitudinal de la biellette (10), une multitude de bandes superposées (22) comportant des fils individuels (20) disposés dans un agencement adjacent, parallèle, les fils (20) étant enroulés en continu autour des coussinets (12, 14) pour former une liaison massive ayant des extrémités semi-circulaires réunies par des portions latérales espacées, disposées en étant opposées (24) des bandes superposées (22), et une composition adhésive durcie (23) disposée entre les portions latérales espacées (24) et enrobant les portions latérales, caractérisée en ce que des fils individuels (20) ne sont pas séparés et ne sont pas liés par la composition adhésive (23), chacun des fils (20) a sur son dessus un lubrifiant sous forme de pellicule solide de sorte que les fils peuvent se déplacer les uns par rapport aux autres, et la composition adhésive (23) est disposée entre les portions latérales (24) d'où la formation d'un moyen (26) pour maintenir les coussinets (12, 14) en relation d'espacement.

2. Biellette (10) selon la revendication 1, caractérisée en ce que le lubrifiant à pellicule solide comprend du graphite ou du bisulfure de molybdène.

3. Biellette (10) selon la revendication 1, caractérisée en ce que le moyen de connexion (18) comprend une ouverture traversante (18), ménagée dans chacun des coussinets (12, 14).

4. Biellette (10) selon la revendication 1, caractérisée en ce que les fils (20) peuvent se déplacer les uns par rapport aux autres tout en évitant sensiblement l'abrasion par leur contact.

5. Biellette (10) selon la revendication 1, dans laquelle la composition adhésive est un uréthane élastomère moulé injecté par réaction ou un uréthane élastomère thermoplastique ou thermodurcissable.

6. Procédé de fabrication d'une biellette (10) selon la revendication 1, comprenant les étapes consistant à:

tirer des fils (20) de bobines tournant de manière uniforme, les fils ayant sur leur dessus un revêtement de lubrifiant sous forme de pellicule solide, ou étant revêtus du librifiant après avoir été extraits des bobines;

tirer des fils (20) à travers une matrice pour disposer chacun des fils (20) parallèlement aux autres dans une formation en bande;

fixer une extrémité de la formation en bande (22) à l'un de deux coussinets espacés à brides (12, 14) dans un dispositif de montage tournant;

faire tourner le dispositif de montage afin d'enrouler la formation en bande (22) autour de chacun des coussinets (12, 14) entre ses flasques;

couper la formation en bande des fils (20) lorsqu'un nombre suffisant de couches a été enroulé autour des coussinets (12, 14) pour former un feuilleté de formations en bandes;

fixer l'extrémité libre de la formation en bande (22) des fils; et

enrober le feuilleté de formations en bandes (22) par application d'un matériau adhésif (23), et procéder à un durcissement pour polymériser le matériau.

7. Procédé selon la revendication 6, caractérisé en ce que le lubrifiant sous forme de pellicule solide est du graphite ou du bisulfure de molybdène.

8. Procédé selon la revendication 6, caractérisé en ce que le matériau adhésif (23) comprend de l'uréthane ayant un module de faible valeur.

9. Procédé selon la revendication 6, caractérisé en ce que le matériau adhésif (23) est de l'uréthane élastomètre moulé injecté par réaction, ou un uréthane élastomère thermoplastique ou thermodurcissable.

FIG. 3

FIG. 1

FIG. 4

FIG. 2